## Europäisches Patentamt

## European Patent Office

## Office européen des brevets

(19)

(11) Numéro de publication: **0 069 023 B1**

(12) **FASCICULE DE BREVET EUROPEEN**

(45) Date de publication du fascicule du brevet:
25.09.85

(51) Int. Cl.⁴: **B 66 F 7/00,** F 16 M 7/00,
**B 60 S 5/00**

(21) Numéro de dépôt: **82401226.4**

(22) Date de dépôt: **30.06.82**

(54) **Dispositif pour la mise en assiette et à hauteur de la caisse d'un véhicule sans le soumettre à aucune contrainte de gauchissement.**

(30) Priorité: **01.07.81 FR 8112949**

(43) Date de publication de la demande:
**05.01.83 Bulletin 83/1**

(45) Mention de la délivrance du brevet:
**25.09.85 Bulletin 85/39**

(84) Etats contractants désignés:
**DE GB IT SE**

(56) Documents cités:
**CH - A - 509 642**
**DE - A - 2 345 894**
**DE - C - 358 327**
**DE - C - 695 881**
**DE - C - 896 420**
**FR - A - 1 004 090**
**FR - A - 2 384 229**
**FR - A - 2 423 478**
**GB - A - 825 167**
**US - A - 3 428 191**

(73) Titulaire: **FACOM, Société dite:, 6 et 8 Rue Gustave Eiffel, F-91423 Morangis (FR)**

(72) Inventeur: **Dossier, Michel, Boisfleuri, F-78630 Orgeval (FR)**

(74) Mandataire: **Polus, Camille et al, c/o Cabinet Lavoix 2, Place d'Estienne d'Orves, F-75441 Paris Cedex 09 (FR)**

ACTORUM AG

## Description

On connaît certes de US-A 3428 191 un dispositif pour la mise en assiette et à hauteur de la caisse d'un véhicule comportant des moyens de support en quatre points dont deux sont en bascule au moyen d'un palonnier. Cependant le dit dispositif sert à soulever et incliner un véhicule pour accomplir des réparations dans la région du dessous dudit véhicule avec une position de travail confortable.

La présente invention concerne d'une façon générale les appareils utilisés pour effectuer le diagnostic ou la réparation des déformations d'un véhicule accidenté, et elle est plus particulièrement relative à un dispositif perfectionné permettant de mettre en place le véhicule à contrôler sur les supports desdits appareils sans masquer un vrillage éventuel de la caisse.

On sait que pour déterminer les déformations subies par la caisse d'un véhicule accidenté, on utilise par exemple un «marbre» qui est une table rigide parfaitement plane sur laquelle on pose la caisse du véhicule de façon à pouvoir mesurer les différences de hauteur de différentes parties de ce véhicule par rapport à la surface du marbre.

Dans ce but on doit poser le véhicule sur des supports, en quatre points, afin qu'il soit stable pour éviter tout risque d'accident.

Cette opération a l'inconvénient de masquer un vrillage éventuel de la caisse dans la mesure où cette caisse vient reposer sur lesdits supports en dépit de son gauchissement, du seul fait qu'elle peut se déformer élastiquement sous l'action de la pesanteur.

Il est également nécessaire pour effectuer certaines mesures de contrôle de pouvoir mettre le véhicule «en assiette», c'est-à-dire qu'un plan de référence lié à la caisse soit amené à l'horizontale ou parallèle au plan du marbre, opération qui nécessite de régler la position du véhicule en roulis et en tangage, c'est-à-dire suivant deux axes sécants.

Jusqu'à présent, cette opération est effectuée en disposant le véhicule sur quatre supports dont on règle successivement la hauteur, avec l'inconvénient quasi inévitable de provoquer un gauchissement de la caisse.

Enfin, sur les marbres de «mesure», il faut encore régler la hauteur du plan de référence du véhicule audessus du plan de marbre, ce qui se fait également en réglant la hauteur des supports avec l'inconvénient soit de masquer un vrillage éventuel si le véhicule est posé sur des supports pré-réglés, soit de provoquer un gauchissement si la hauteur de ces supports est réglée véhicule en place.

L'invention a pour but de remédier à ces inconvénients en fournissant un dispositif permettant de mettre en assiette et en hauteur la caisse d'un véhicule sans lui imposer de contraintes de gauchissement pour procéder au diagnostic et à la réparation des déformations de ce véhicule accidenté, en mesurant ces déformations avec exactitude sur un marbre, sur un appareil élévateur, ou même sur un sol quelconque.

L'invention a pour objet à cet effet un dispositif pour mettre en assiette la caisse d'un véhicule, sans qu'il soit soumis à des contraintes quelconques, du type comportant des moyens de support en quatre points dont deux sont en bascule au moyen d'un palonnier hydraulique on mécanique, caractérisé en ce que ledit palonnier est réglable en hauteur.

Suivant une autre caractéristique de l'invention, au moins l'un des deux moyens de support reliés ensemble par le palonnier est réglable en hauteur.

Dans un autre mode de réalisation de l'invention, dans le cas d'un palonnier hydraulique constitué par des vérins hydrauliques dont les cylindres communiquent librement, les deux vérins sont réglables simultanément en hauteur.

D'une façon avantageuse, l'un au moins des deux moyens de support qui ne sont pas reliés en bascule est réglable en hauteur.

D'autres caractéristiques et avantages de l'invention apparaîtront au cours de la description qui va suivre, faite en référence aux dessins annexés donnés uniquement à titre d'exemple et dans lesquels:

– la Fig. 1 est un schéma illustrant le principe de base du dispositif suivant l'invention;

– la Fig. 2 est une vue en élévation d'un palonnier d'équilibrage mécanique adapté sur l'une des branches de la fourche d'un chariot élévateur;

– la Fig. 3 est une vue en coupe suivant la ligne 3–3 de la Fig. 2;

– la Fig. 4 est une vue schématique montrant les deux moyens de support reliés ensemble au moyen d'un dispositif d'équilibrage hydraulique;

– la Fig. 5 est une vue schématique montrant les deux moyens de support indépendants fixés sur deux branches d'un pont élévateur à deux colonnes;

– la Fig. 6 est une vue d'ensemble en perspective d'un véhicule mis en assiette au moyen d'un dispositif suivant l'invention sur la fourche d'un chariot élévateur;

– la Fig. 7 est une vue partielle en perspective d'un organe de levage réglable montrant un mode de réalisation de moyens de fixation de cet organe sur l'extrémité d'une branche d'un pont élévateur du type à deux colonnes;

– la Fig. 8 est une vue partielle en perspective montrant un autre mode de réalisation des moyens de fixation d'un organe de levage faisant partie du dispositif de mise en assiette suivant l'invention.

On pose ce corps C de façon que sa surface inférieure irrégulière repose sur quatre points de support AA', BB' qui sont situés deux à deux de part et d'autre du plan vertical contenant le centre de gravité G.

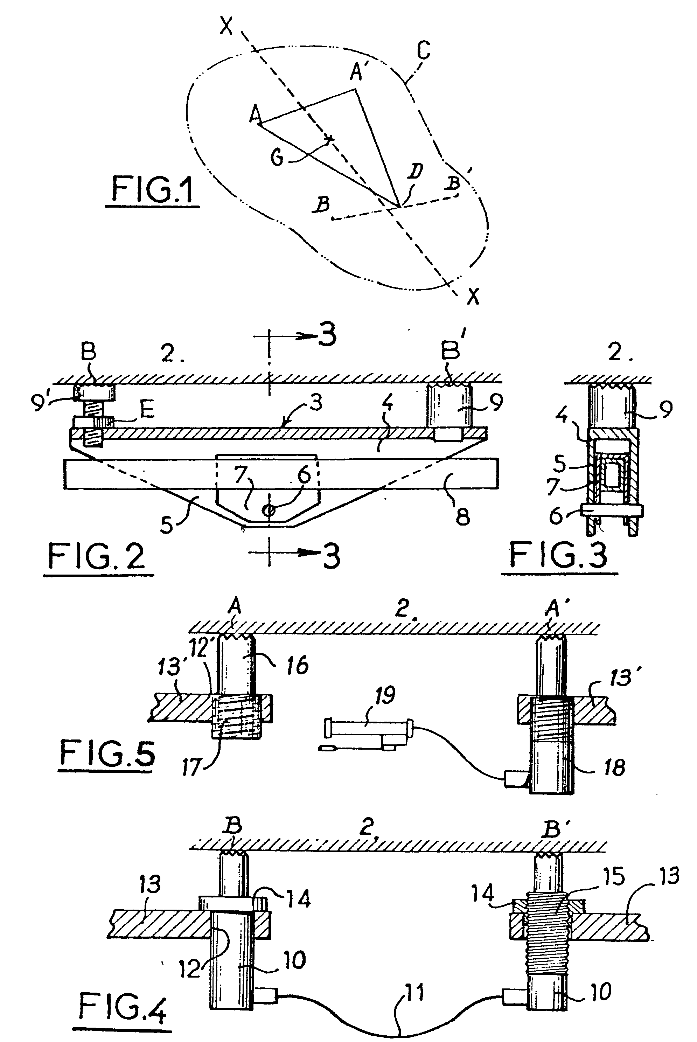

En se référant au schéma de la Fig. 1, soit un corps C par exemple la caisse d'un véhicule représentée en traits mixtes ayant une surface inférieure quelconque irrégulière comportant au moins un point de référence et devant être soutenu sans être soumis à une contrainte quelconque dûe notamment à la gravité agissant en porte-à-faux et qui serait susceptible de déformer ce corps. Le corps C comporte un centre de gravité G qui est situé dans un plan vertical indiqué par un axe X-X.

On pose ce corps C de façon que sa surface inférieure irrégulière repose sur quatre points de support AA', BB' qui sont situés deux à deux de part et d'autre du plan vertical contenant le centre de gravité G.

Si deux des quatre points de support, par exemple les points BB', sont reliés ensemble par des moyens adaptés pour les contraindre de se déplacer simultanément en sens inverse de distances égales de haut en bas et vice-versa de part et d'autre d'un point intermédiaire D situé à des distances égales des points BB', le corps C reposera en équilibre stable sur trois points d'appui au sol A, A', D délimitant entre eux un triangle dans les limites duquel sera situé le centre de gravité G du corps.

Du fait de l'équilibrage de charge assuré par le dispositif reliant entre eux les points BB' le corps C prendra une position déterminée par la position des points A, A' et D et dans laquelle ce corps ne sera soumis à aucune contrainte dûe à la gravité, en raison de l'autoéquilibrage assuré par le dispositif reliant entre eux les points BB' en bascule libre.

On comprend également que si on règle la hauteur d'au moins l'un des points de support AA', on peut amener à l'horizontale une droite de référence liée au corps C et s'étendant à peu près parallèlement au côté AA' du triangle AA'D.

Si on règle alors la hauteur des moyens de support reliant les points BB' en bascule, on peut amener une seconde droite de référence liée au corps C, sécante de l'axe AA' dans un plan également horizontal.

On aura ainsi réalisé la mise en assiette du corps C.

On a représenté à la Fig. 2 un mode de réalisation d'un dispositif de liaison en bascule de deux des points de support BB' de la surface inférieure de la caisse d'un véhicule désignée par la référence 2.

Ce dispositif constitue un palonnier d'équilibrage de charge désigné dans son ensemble par la référence 3, qui comporte un bras 4 constitué par un support de forme allongée ayant en section une forme en U inversé dont les ailes 5 présentent en élévation une forme à peu près triangulaire, constituant une chape dont les extrémités des ailes 5 sont traversées au voisinage de leur sommet par un axe 6 sur lequel est articulé un étrier 7 adapté pour être disposé à cheval sur un support 8.

A chacune de ses extrémités, le bras 4 comporte une chandelle dont l'une 9 est de hauteur fixe tandis que la chandelle opposée 9' est du type à vis et réglable en hauteur au moyen d'un écrou E.

On comprend que ce dispositif forme un palonnier mécanique ou bascule dont les moyens de support 9, 9' soutiennent la caisse 2 du véhicule aux points B, B' dans une position d'équilibre, sans porte-à-faux, les points A, A' de la caisse étant soutenus par des chandelles ou des chevalets dont l'un A' est réglable, et l'autre fixe, assurant à l'ensemble un équilibre stable.

On comprend que l'axe 6 constitue le point d'appui D des organes de support 9, 9' soutenant les points B, B' de la caisse du véhicule. De ce fait, celle-ci se trouve soutenue en équilibre stable sur les trois points A, A' (6) disposés en triangle (le point 6 correspondant au point D). On comprend également que l'axe 6 peut également être monté réglable en hauteur sur le support 8, ou que celui-ci peut être réglable dans son ensemble en hauteur par des moyens mécaniques bien connus.

On remarquera également que le palonnier d'équilibrage 3 peut être monté de façon amovible sur l'une des branches de la fourche d'un chariot élévateur, permet d'effectuer des mesures des déformations de la caisse, celle-ci étant en équilibre stable et libérée de toute contrainte dûe à la gravité, les chandelles ou chevalets, ou autres moyens de support appropriés disposés au-dessous des points A, A' étant alors posés sur la branche opposée de la fourche du chariot élévateur.

Pour effectuer un diagnostic des déformations de la caisse du véhicule on peut alors utiliser un outil de type connu constitué par exemple par une règle rectiligne rigide comportant un niveau à bulle et aux extrémités de laquelle s'étendent perpendiculairement deux jauges parallèles réglables dont l'extrémité de l'une sera posée en un point de référence de la caisse et dont l'autre permettra de mesurer l'écart de hauteur en un autre point de référence de la caisse.

Le dispositif suivant l'invention peut également être utilisé en l'absence d'un chariot élévateur, les moyens de support pouvant être utilisés au sol, la caisse pouvant être posée sur les moyens de support en utilisant un simple cric.

La Fig. 3 qui est une vue en coupe suivant la ligne 3-3 de la Fig. 2 montre clairement l'agencement des ailes 5 du palonnier 3 et de la chape 7 de part et d'autre du support 8 sur lequel il est retenu par l'axe 6.

On a représenté à la Fig. 4 un autre mode de réalisation d'un dispositif suivant l'invention pour relier en bascule et soutenir les points B, B' de la caisse 2 du véhicule.

Suivant ce mode de réalisation, les moyens de support utilisés sont des vérins hydrauliques 10 dont les cylindres montés chacun sur un support sont reliés l'un à l'autre en communication libre de fluide au moyen d'un tuyau 11. On comprend que les tiges de piston des vérins 10 se déplacent simultanément en sens inverse de distances égales en montant ou en descendant par rapport à un point virtuel (D) qui est situé à égale distance des deux vérins 10.

Dans l'exemple de la Fig. 4, les vérins 10 ont été représentés montés dans des trous 12 prévus à l'extrémité de deux fourches 13 opposées d'un appareil élévateur du type à deux colonnes sur laquelle chaque vérin est retenu au moyen d'un collier 14 qui peut être vissé sur la surface externe du cylindre du vérin, filetée à cette fin comme représenté en 15.

On comprend que dans ce mode de réalisation, comme dans le premier mode décrit plus haut, on peut régler la hauteur du dispositif en agissant sur le collier 14 pour élever ou abaisser le cylindre du vérin 10 par rapport à la fourche 13, faisant ainsi monter ou descendre la caisse 2 du véhicule.

La Fig. 5 montre un autre mode de réalisation avantageux des moyens de support utilisés pour soutenir les points AA' de la caisse 2 du véhicule, qui ne sont pas reliés entre eux en bascule.

Suivant ce mode de réalisation, une chandelle 16 comporte une extrémité filetée 17 qui est vissée dans un trou 12' d'un support 13' qui, dans cet exemple, est l'extrémité d'une fourche d'un appareil élévateur du type à deux colonnes.

Bien que le moyen de support disposé dans l'extrémité de la fourche 13' opposée puisse être également une chandelle fixe comme indiqué plus haut, il est avantageux que ce moyen de support soit également réglable en hauteur.

De préférence, suivant le mode de réalisation représenté, le moyen de support disposé au-dessous du point A' est constitué par un vérin 18 dont le cylindre peut être vissé dans un trou prévu à l'extrémité de la fourche ou autre support. Ce vérin peut être relié à une pompe hydraulique 19 dans un but que l'on va décrire.

Pour obtenir un réglage de la caisse en roulis, il suffit d'actionner le vérin 18 au moyen de la pompe 19 pour amener à l'horizontale une droite liée à la caisse du véhicule et s'étendant à peu près parallèlement à l'axe A, A'. On règle ensuite la hauteur du dispositif reliant en bascule les points B, B' de façon à amener à l'horizontale une droite liée à la caisse du véhicule et sécante de l'axe A, A', la caisse du véhicule se trouve ainsi réglée en tangage. Bien entendu pour que ce réglage en tangage ne détruise pas le réglage de la caisse en roulis il est indispensable que les organes de support A, A' en bascule soient situés sur une transversale à peu près perpendiculaire au plan longitudinal de symétrie au véhicule.

On a ainsi mis en assiette la caisse du véhicule, ce qui permet d'effectuer différentes mesures pour en contrôler la géométrie.

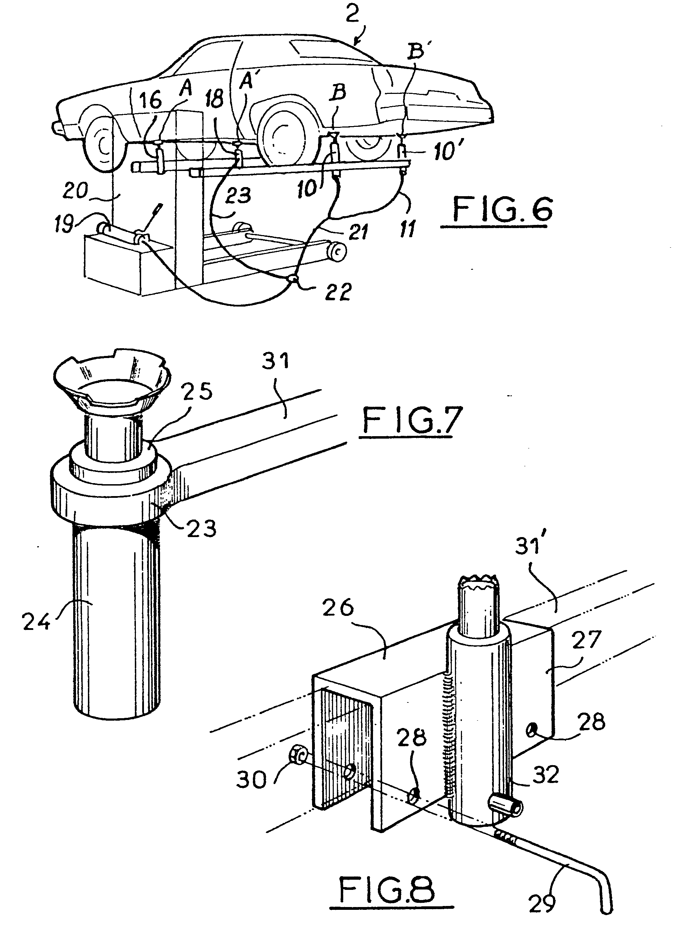

On a représenté à la Fig. 6 un mode de réalisation particulièrement avantageux du dispositif suivant l'invention dans lequel les moyens de support sont montés amovibles sur les branches de la fourche d'un chariot élévateur désigné dans son ensemble par la référence 20.

Dans ce mode de réalisation, les vérins 10, 10' reliant entre eux en bascule les points B, B' sont reliés par le tuyau 11 qui est lui-même relié à la pompe 19 au moyen d'un tuyau 21, par l'intermédiaire d'un distributeur 22 auquel est également relié le vérin 18 au-dessous du point A' au moyen d'un tuyau 23. Le véhicule ayant été posé sur les moyens de support 16, 18 et 10, 10', la chandelle 16 constitue un point de support fixe, la caisse du véhicule prenant sa position d'équilibre sur les points BB' reliés en bascule par le dispositif de vérins hydrauliques 10, 10', 11 et on peut alors actionner la pompe 19 en réglant le distributeur 22 pour monter seulement d'abord le vérin 18 et ensuite les vérins 10, permettant ainsi une mise en assiette extrêmement facile du véhicule.

On a représenté à la Fig. 7 un mode de fixation d'un vérin, hydraulique ou mécanique, sur l'extrémité d'une branche d'un pont élévateur du type à deux colonnes, qui comporte à son extrémité un oeil dans lequel est introduit le cylindre d'un vérin 24, maintenu au moyen d'un collier 25 qui peut être vissé sur un filetage externe du cylindre comme représenté à la Fig. 4.

La Fig. 8 montre un autre mode de réalisation d'un dispositif de fixation amovible d'un vérin ou autre support sur une branche d'un chariot élévateur à fourche ou d'une fourche d'un pont élévateur du type à deux colonnes désigné par la référence 31' et représenté en traits mixtes.

Ce dispositif de fixation comporte une chape 26 ayant en section une forme en U inversé dont les ailes ont une longueur supérieure à la hauteur de la branche 31' de façon à s'étendre au-delà de la partie inférieure de celle-ci, les ailes 27 comportant des trous 28 dans lesquels peuvent être introduites des broches 29 ayant une extrémité filetée adaptée pour coopérer avec un écrou 30. Sur l'une des ailes 27 est soudé le cylindre d'un vérin hydraulique 32.

On comprend que le dispositif suivant l'invention permet de soutenir la caisse d'un véhicule en équilibre stable et sans aucun porte-à-faux susceptible de la déformer, à une hauteur permettant à un opérateur de travailler facilement, notamment sur les branches d'un chariot élévateur ou sur celles d'un pont, le dégagement total des accès à la caisse du véhicule permettant d'effectuer facilement des mesures de diagnostic et la mesure des écarts éventuels de symétrie et de la caisse. Ce dispositif permet également la mise en assiette d'un corps, notamment d'une caisse de véhicule de façon simple et rapide suivant deux axes orthogonaux horizontaux, c'est-à-dire en roulis et en tangage ce qui permet alors non seulement de vérifier les cotes spécifiées par le constructeur, mais également de mesurer différents angles au moyen d'un clinomètre.

Enfin, de façon avantageuse, les différents vérins peuvent comporter chacun un moyen de blocage mécanique comme connu en soi pour assurer leur position une fois le réglage effectué.

On remarquera que dans une variante, non représentée, le bras du palonnier mécanique lui-même peut être réglable en hauteur.

Il convient enfin de souligner que le dispositif suivant l'invention permet d'effectuer encore une autre opération qui est le contrôle de la symétrie des suspensions avant ou arrière en hauteur.

Cette opération peut être effectuée en disposant les moyens de support en bascule de façon à soutenir par exemple le train arrière au-dessus du sol, comme pour la mise en assiette, mais avec les roues avant reposant sur le sol, et en mesurant la hauteur de la caisse par rapport au sol, à l'avant, à gauche et à droite en deux points symétriques.

## Revendications

1. Dispositif pour la mise en assiette et à hauteur de la caisse d'un véhicule (2) sans le soumettre à aucune contrainte de gauchissement, du type comportant des moyens de support (9, 9', 10, 10', 16, 18, 24, 32) en quatre points dont deux sont en bascule au moyen d'un palonnier hydraulique (vérins 10), ou mécanique (3), caractérisé en ce que ledit palonnier (3, vérins 10) est réglable en hauteur.

2. Dispositif suivant la revendication 1, dans lequel le palonnier est mécanique, caractérisé en ce que l'un au moins des deux moyens de support (9, 9') reliés ensemble en bascule par le palonnier (3) est réglable en hauteur.

3. Dispositif suivant la revendication 1, dans lequel le palonnier est hydraulique, caractérisé en ce que l'un au moins des deux moyens de support B, B' reliés en bascule par le palonnier (vérins 10) est réglable en hauteur.

4. Dispositif suivant la revendication 1, dans lequel le palonnier est hydraulique, caractérisé en ce que deux vérins (10) communiquant ensemble constituant le palonnier sont réglables en hauteur, simultanément.

5. Dispositif suivant l'une quelconque des revendications 1 à 4, caractérisé en ce que l'un au moins, A', desdits moyens de support A, A' qui ne sont pas reliés en bascule est réglable en hauteur.

6. Dispositif suivant la revendication 5, caractérisé en ce que ledit moyen de support A' réglable en hauteur est un vérin hydraulique qui est relié à un distributeur (22) alimenté par une pompe hydraulique (19) et relié également aux verins (10, 10') de la bascule hydraulique.

7. Dispositif suivant l'une quelconque des revendications précédentes, caractérisé en ce que lesdits moyens de support (9, 9', 10, 10', 16, 18, 24, 32) sont pourvus chacun de moyens de fixation (7, 14, 15, 17, 25, 26) adaptés pour être montés de façon amovible sur les branches (8, 13, 13', 31, 31') d'un appareil élévateur mobile ou fixe.

8. Appareil élévateur mobile ou fixe caractérisé en ce qu'il comporte un dispositif tel que défini suivant l'une quelconque des revendications 1 à 7, dont les moyens de support (9, 9', 10, 10', 16, 18, 24, 32) sont fixés sur ses organes élévateurs.

## Patentansprüche

1. Vorrichtung zur Bezugslage- und Höhensetzung des Kastens eines Fahrzeuges (2), ohne dieses einer Verwindungsbeanspruchung zu unterwerfen, mit Mitteln zur Unterstützung (9, 9', 10, 10', 16, 18, 24, 32) in vier Punkten, von denen zwei in Wippenanordnung mittels eines hydraulischen (Winden 10) oder mechanischen (3) Hebels sind, dadurch gekennzeichnet, dass der Hebel (3, Winden 10) in der Höhe verstellbar ist.

2. Vorrichtung nach Anspruch 1, wobei der Hebel mechanisch ist, dadurch gekennzeichnet, dass wenigstens eines der beiden durch den Hebel (3) in Wippenanordnung verbundenen Unterstützungsmittel (9, 9') in der Höhe verstellbar ist.

3. Vorrichtung nach Anspruch 1, wobei der Hebel hydraulisch ist, dadurch gekennzeichnet, dass wenigstens eines der beiden durch den Hebel (Winden 10) in Wippenanordnung verbundenen Unterstützungsmittel B, B' in der Höhe verstellbar ist.

4. Vorrichtung nach Anspruch 1, wobei der Hebel hydraulisch ist, dadurch gekennzeichnet, dass zwei den Hebel bildend miteinander kommunizierende Winden (10) gleichzeitig in der Höhe verstellbar sind.

5. Vorrichtung nach irgendeinem der Ansprüche 1 bis 4, dadurch gekennzeichnet, dass wenigstens eines, A', der Unterstützungsmittel A, A', welche nicht in Wippenanordnung verbunden sind, in der Höhe verstellbar ist.

6. Vorrichtung nach Anspruch 5, dadurch gekennzeichnet, dass die in der Höhe verstellbaren Unterstützungsmittel A' eine hydraulische Winde sind, welche mit einem von einer hydraulischen Pumpe (19) gespeisten und auch mit den Winden (10, 10') der hydraulischen Wippe verbundenen Verteiler (22) verbunden ist.

7. Vorrichtung nach irgendeinem der vorstehenden Ansprüche, dadurch gekennzeichnet, dass die Unterstützungsmittel (9, 9', 10, 10', 16, 18, 24, 32) jeweils mit Befestigungsmitteln (7, 14, 15, 17, 25, 26) versehen sind, welche an den Schenkeln (8, 13, 13', 31, 31') einer ortsveränderlichen oder ortsfesten Hebevorrichtung lösbar anbringbar sind.

8. Ortsveränderliche oder ortsfeste Hebevorrichtung, dadurch gekennzeichnet, dass sie eine Vorrichtung nach irgendeinem der Ansprüche 1 bis 7 aufweist, deren Unterstützungsmittel (9, 9', 10, 10', 16, 18, 24, 32) an ihren Hebeelementen befestigt sind.

## Claims

1. A device for setting the attitude and the measuring height of the body of a vehicle (2) without subjecting it to any warping stress, of the type comprising support means (9, 9', 10, 10', 16, 18, 24, 32) at four points, two of which are arranged as a balance by hydraulic (jacks 10) or mechanical (3) balancing means, characterised in that said balance (3, jacks 10) is adjustable in height.

2. A device according to claim 1, wherein the balance is mechanical, characterised in that at least one of the two support means (9, 9') interconnected as a balance by the balance (3) is adjustable in height.

3. A device according to claim 1, wherein the balance is hydraulic, characterised in that at least one of the two support means B, B' interconnected as a balance by the balance (jacks 10) is adjustable in height.

4. A device according to claim 1, wherein the balance is hydraulic, characterised in that two jacks (10) which communicate with each other and constitute the balance are adjustable in height simultaneously.

5. A device according to any one of the claims 1 to 4, characterised in that at least one, A', of said

**0 069 023**

support means A, A' which are not interconnected in the manner of a balance is adjustable in height.

6. A device according to claim 5, characterised in that said support means A' adjustable in height is a hydraulic jack which is connected to a directional valve (22) supplied with fluid by a hydraulic pump (19) and also connected to the jacks (10, 10') of the hydraulic balance.

7. A device according to any one of the preceding claims, characterised in that said support means (9, 9', 10, 10', 16, 18, 24, 32) are each provided with fixing means (7, 14, 15, 17, 25, 26) adapted to be detachably mounted on the branches (8, 13, 13', 31, 31') of a fixed or mobile elevating apparatus.

8. A fixed or mobile elevating apparatus, characterised in that it comprises a device according to any one of the claims 1 to 7, the support means (9, 9', 10, 10', 16, 18, 24, 32) of which device are fixed to its elevating elements.

FIG.1

FIG.2

FIG.3

FIG.5

FIG.4

FIG.6

FIG.7

FIG.8